# FASCICULE DE BREVET EUROPEEN

(11) **EP 3 061 595 B1**
(45) Date de publication et mention de la délivrance du brevet: **16.09.2020**
(21) Numéro de dépôt: 16157734.1
(22) Date de dépôt: 26.02.2016
(51) Int. Cl.: B29C 70/32, B29C 70/34, B29C 70/44, B29L 23/00, B29L 31/00

(54) **PROCÉDÉ DE FABRICATION DE PROFILÉ CREUX EN MATÉRIAUX COMPOSITES**
HERSTELLUNGSVERFAHREN VON HOHLPROFILEN AUS VERBUNDMATERIALIEN
METHOD FOR PRODUCING HOLLOW SECTIONS MADE IN COMPOSITE MATERIAL

(30) Priorité: 27.02.2015 FR 1551698
(43) Date de publication de la demande: 31.08.2016
(73) Titulaire: Faurecia Automotive Composites, 92000 Nanterre (FR)
(72) Inventeur: BRANDON, Cyrille, 35400 SAINT MALO (FR); DIDION, Basile, 75020 PARIS (FR)
(74) Mandataire: Lavoix

(56) Documents cités:
- EP-A2- 2 116 356
- US-A1- 2014 262 651
- US-B2- 6 835 263
- US-B2- 8 869 361

## Description

La présente invention concerne un procédé de fabrication de profilés creux, notamment d'absorbeurs de chocs pour véhicule.

Des procédés du type précité sont connus, par exemple le procédé de pultrusion ou d'enroulement filamentaire.

Les documents US 2014/262651 A1, US 6 835 263 B2 et EP 2 116356 A2 décrivent, par exemple, différents procédés de fabrication de profilés creux.

Le procédé de pultrusion consiste à imprégner des fibres dans un bain de résine thermodurcissable puis à tirer les fibres à travers une longue filière chauffée qui contrôle la teneur en résine et détermine la forme de la section des profilés créés. Pour la pultrusion thermoplastique, le bain de résine est remplacé par l'injection de résine dans la filière. Le profilé est ensuite coupé à la longueur souhaitée en sortie du dispositif de pultrusion. Cependant, le contrôle de l'orientation des fibres est compliqué et il est impossible d'utiliser des fibres coupées, car les fibres doivent s'étendre de la filière à la sortie du dispositif de pultrusion pour pouvoir être tirées dans ce dispositif.

Le procédé d'enroulement filamentaire consiste quant à lui à enrouler des fibres sous forme de mèche suivant plusieurs directions, les fibres étant également imprégnées de résine thermodurcissable, autour d'un mandrin. Cependant, les résines thermodurcissables ont un comportement au choc fragile, au contraire des résines thermoplastiques qui sont particulièrement intéressantes pour des applications d'absorption d'énergie.

Un but de l'invention est donc de fournir un procédé efficace pour fabriquer des profilés creux en composite ayant des fibres orientées selon n'importe quelle direction voulue, que ce soient des fibres continues ou des fibres coupées, et ayant un bon comportement au choc.

A cet effet, l'invention a pour objet un procédé de fabrication de profilés creux selon la revendication 1.

L'utilisation d'un tel procédé permet notamment d'obtenir un profilé creux en matériau composite d'un seul tenant, ayant des fibres, continues ou coupées, orientées selon toutes les directions souhaitées sans limitation, et une résine pouvant être en matériau thermoplastique, thermodurcissable ou autre.

Selon des modes de réalisation particuliers de l'invention, le dispositif présente l'une ou plusieurs caractéristiques des revendications 2 à 10.

D'autres caractéristiques et avantages de l'invention apparaîtront à la lecture de la description qui va suivre, donnée uniquement à titre d'exemple et faite en se référant aux dessins annexés, sur lesquels :
- la figure 1 est une vue schématique d'un ensemble pour véhicule automobile comprenant un absorbeur de chocs obtenu par un procédé selon l'invention ;
- la figure 2 est une représentation schématique d'une installation permettant de mettre en œuvre le procédé de l'invention selon un mode de réalisation du procédé selon l'invention ;
- les figures 3 à 5 sont des représentations schématiques de différentes étapes de l'enroulement de la feuille en matériau composite autour d'une pièce de formage, d'après un mode de réalisation du procédé selon l'invention ;
- la figure 6 est une représentation schématique en coupe transversale d'un exemple de profilé creux obtenu par le procédé de l'invention ;
- la figure 7 est une représentation schématique de l'étape du découpage des profilés creux à l'issue du procédé selon l'invention.

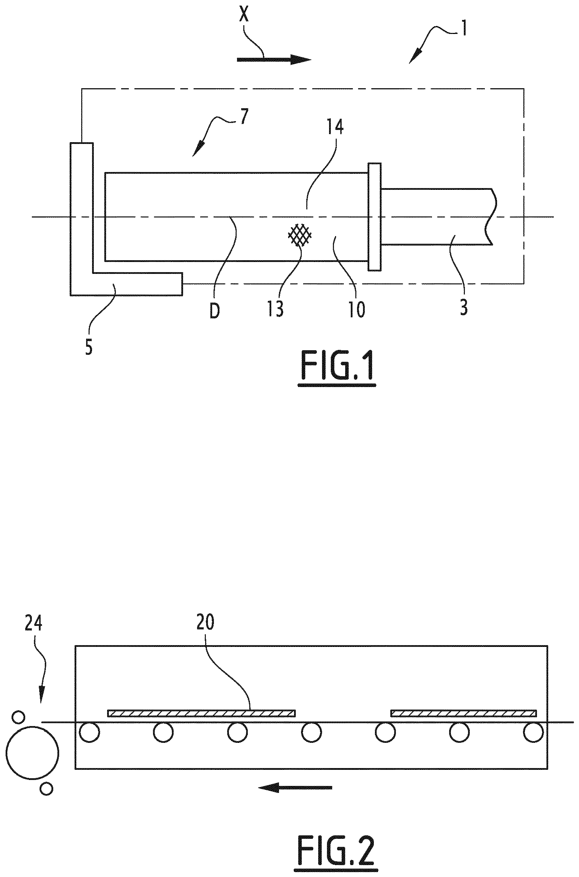

Comme représenté très schématiquement sur la figure 1, un véhicule automobile 1 comprend un longeron 3 s'étendant par exemple selon une direction longitudinale X du véhicule automobile, une poutre de chocs 5 situé par exemple à l'avant du véhicule automobile, et un absorbeur de chocs 7 situé longitudinalement entre la poutre de chocs et le longeron.

Le longeron 3 est par exemple un longeron latéral du véhicule automobile 1, le véhicule automobile comportant alors un autre longeron (non représenté) analogue au longeron 3 et sensiblement parallèle au longeron 3, et un autre absorbeur de chocs (non représenté) analogue à l'absorbeur de chocs 7.

La poutre de chocs 5 est par exemple formée d'une traverse 5 d'étendant transversalement d'un longeron à l'autre.

Comme visible sur la figure 1, l'absorbeur de chocs 7 présente une forme allongée selon une direction axiale D par exemple sensiblement parallèle à la direction longitudinale X lorsque que l'absorbeur de chocs 7 est en place dans le véhicule automobile 1.

L'absorbeur de chocs 7 s'étend axialement sur une longueur L (figure 1), par exemple comprise entre 50 et 200 mm, et présente un diamètre, par exemple compris entre 80 et 120 mm. L'absorbeur de chocs présente par exemple une forme générale cylindrique selon la direction axiale D et à base circulaire. En variante, l'absorbeur de chocs 7 a une base polygonale régulière, comme une base hexagonale ou une base carrée.

Un tel absorbeur est agencé pour s'écraser en cas de chocs contre le véhicule et ainsi absorber une partie de l'énergie de ce choc. On a constaté qu'un absorbeur réalisé en matériau composite permet à celui-ci d'avoir des caractéristiques mécaniques satisfaisantes par sa fonction d'absorption d'énergie tout en étant particulièrement léger.

Selon l'invention, l'absorbeur de chocs 7 est formé par un profilé creux comprenant une feuille 10 en matériau composite, enroulée sensiblement autour de l'axe D. Dans l'exemple représenté, l'absorbeur de chocs 7 est en fait constitué par la feuille enroulée 10.

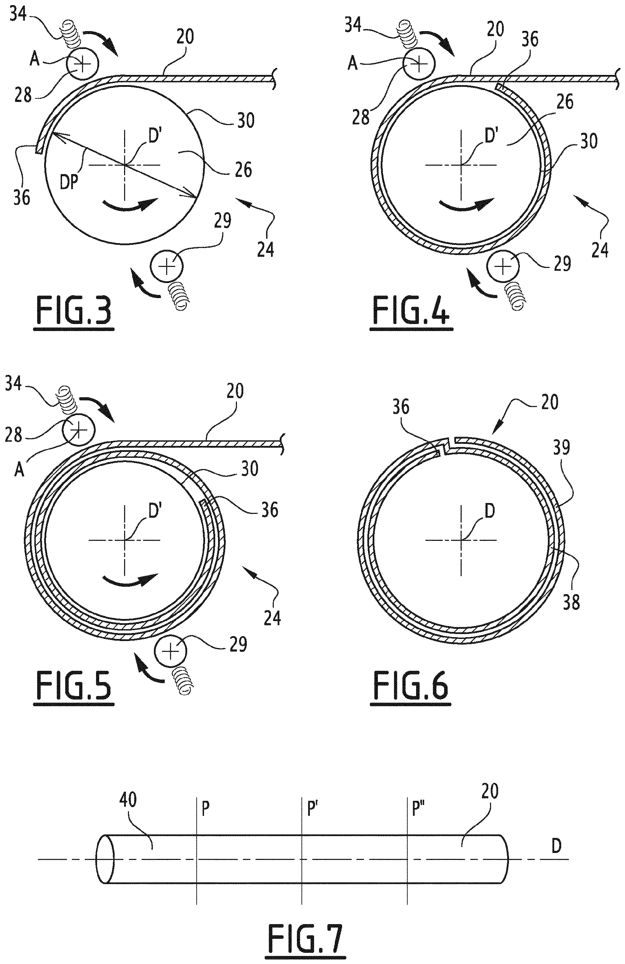

Dans un mode de réalisation, la feuille 10 est enroulée sur plusieurs tours autour de l'axe D, comme représenté sur la figure 6.

La feuille 10 comporte des fibres 13 continues ou coupées et une matrice 14, par exemple thermoplastique ou thermodurcissable, enrobant les fibres.

Les fibres 13 sont par exemple des fibres de verre ou des fibres de carbone.

Selon un mode particulier de réalisation (non représenté), les fibres 13 sont unidirectionnelles, par exemple orientées sensiblement selon le sens de la longueur de la feuille enroulée 10, qui s'étend elle-même par exemple selon une direction perpendiculaire à l'axe D. Par conséquent, dans ce mode de réalisation, les fibres s'étendent selon une direction sensiblement perpendiculaire à l'axe D du profilé.

Il est également possible d'orienter les fibres selon n'importe quelle direction, y compris une direction différente de l'axe D du profilé. Selon un autre mode particulier de réalisation (figure 2), les fibres 13 sont bidirectionnelles. Par exemple un sous-ensemble des fibres 13 est orienté sensiblement selon le sens de la longueur de la feuille enroulée 10 et un autre sous-ensemble des fibres 13 est orienté sensiblement dans le sens de la largeur de la feuille enroulée 10.

La matrice 14 est préférentiellement thermoplastique. Cela permet notamment d'obtenir un meilleur comportement au choc de l'absorbeur de chocs et d'avoir une feuille malléable dès qu'elle est chauffée, contrairement à une matrice thermodurcissable qui, une fois chauffée à une température donnée, est rigide.

La matrice 14 est par exemple en polypropylène ou en polyamide ou en polyétheréthercétone.

Le procédé selon l'invention va maintenant être décrit en référence à la figure 2. Le procédé permet d'obtenir un profilé creux, tel que l'absorbeur de chocs décrit ci-dessus.

Une feuille 20 de composition identique à la feuille enroulée 10 décrite ci-dessus est obtenue à partir d'un système distributeur. Une telle feuille est notamment connue sous le terme anglais d' « organo sheet » pour des composites à base de résine thermoplastique ou sous le terme « pré-imprégné » pour des composites à base de résine thermodurcissable.

On appelle largeur une dimension de la feuille, supérieure à la longueur du profilé creux que l'on souhaite obtenir, cette longueur étant la dimension du profilé selon son axe D, et longueur une dimension perpendiculaire à la largeur. Les termes « longueur » et « largeur » ne signifient pas nécessairement que la longueur est supérieure à la largeur, mais permettent simplement de distinguer deux dimensions perpendiculaires de la feuille 20.

La largeur est par exemple sensiblement égale à un multiple de la longueur du profilé creux, que l'on souhaite réaliser, et comprise entre 1500 et 2000mm. La longueur est supérieure au périmètre du profilé creux que l'on souhaite obtenir et, par exemple, comprise entre 500 et 2000mm.

La feuille présente par exemple une épaisseur comprise entre 1 et 3mm.

Dans la suite de la description, la feuille a sensiblement la forme d'un rectangle, ayant pour largeur et longueur les deux dimensions de ses côtés.

La feuille 20 est par exemple chauffée pour obtenir une feuille malléable. La feuille 20 est par exemple chauffée dans un four ou sur une table chauffante.

En variante la feuille 20 est malléable à la température ambiante et n'est pas chauffée. On utilise par exemple des pré-imprégnés thermodurcissables.

Puis, la feuille 20 est dirigée vers un système de formage 24 représenté sur les figures 3 à 5. Selon le mode de réalisation représenté sur les figures, le système de formage 24 comprend une pièce de formage 26 et au moins un rouleau de calandrage 28, 29.

La pièce de formage 26 est par exemple une forme allongée présentant une surface externe 30 sensiblement complémentaire de la surface interne du profilé creux à réaliser. La longueur de la pièce de formage 26 mesurée selon son axe est par exemple supérieure à la largeur de la feuille 20.

Dans le mode de réalisation décrit ci-dessous, la pièce de formage 26 est un rouleau cylindrique d'axe central D' et de diamètre DP permettant notamment de réaliser des profilés creux ronds. Dans d'autres modes de réalisation, la pièce de formage 26 a une autre forme : par exemple une barre parallélépipédique si l'on souhaite réaliser un profilé creux à section carrée ou rectangulaire.

Le rouleau de calandrage 28, 29 est une forme allongée ayant une surface externe et une longueur supérieure à la largeur de la feuille 20 et par exemple sensiblement égale à la longueur de la pièce de formage 26 et d'axe parallèle à l'axe de la pièce de formage 26. Le rouleau de calandrage 28, 29 est situé à proximité de la pièce de formage 26, sur un dispositif agencé pour permettre d'appliquer une pression sur la feuille 20. Initialement, la distance entre les surfaces externes de la pièce de formage 26 et du rouleau de calandrage 28, 29 est sensiblement inférieure ou égale à l'épaisseur de la feuille.

Dans le mode de réalisation décrit ci-dessous, le rouleau de calandrage 28, 29 est un rouleau cylindre d'axe central A, tel que l'axe A est parallèle à l'axe D'. Le rouleau de calandrage 28, 29 est placé tel que le rouleau de calandrage 28, 29 et la pièce de formage 26 sont sensiblement côte à côte.

Dans un mode de réalisation, l'emplacement du rouleau de calandrage 28, 29 est contrôlé par un système de contrôle 34 du rouleau de calandrage. Le système de contrôle 34 permet de déplacer le rouleau de calandrage 28, 29 par rapport à la pièce de formage 26 tel que les axes A et D' restent parallèles, mais que la distance entre le rouleau de calandrage 28, 29 et la pièce de formage 26 varie. Le système de contrôle 34 est par exemple un système à ressort.

Selon le mode de réalisation représenté sur les figures 3 à 5, il y a deux rouleaux de calandrage 28, 29 disposés de part et d'autre de la pièce de formage 26 pour guider l'enroulement de la feuille 20 autour de la pièce de formage 26. Cela permet aussi d'appliquer une pression suffisante sur la feuille 20 afin d'assurer un bon compactage de la matière pour garantir les propriétés mécaniques recherchées.

Comme représenté à la figure 3, la feuille 20 est placée en un de ses côtés 36 en contact avec la pièce de formage 26 telle que la largeur de la feuille soit parallèle à l'axe D' et que le côté 36 de la feuille 20 ne dépasse pas de la pièce de formage 26.

La pièce de formage 26 a un mouvement de rotation autour de l'axe D' telle que la feuille 20 est entraînée par la pièce de formage 26, comme représenté sur les figures 4 et 5. La vitesse de rotation de la pièce de formage 26 est indexée sur la vitesse d'avance de tapis du four, ou, si la feuille 20 n'est pas préchauffée, sur la vitesse d'avance du moyen amenant la feuille 20 au système de formage 24. La feuille 20 s'enroule donc autour de la surface externe 30 de la pièce de formage 26, entre la pièce de formage 26 et le ou les rouleaux de calandrage 28, 29.

Le rouleau de calandrage 28, 29 est par exemple mobile en rotation par rapport à son axe A. Le sens de rotation du ou des rouleaux de calandrage 28, 29 est par exemple opposé à celui de la pièce de formage 26, ce qui permet d'assister l'enroulement de la feuille 20 sur la pièce de formage 26.

Si la longueur de la feuille 20 est égale ou légèrement supérieure à π^{∗}DP, DP étant le diamètre de la pièce de formage 26, alors la feuille 20 est enroulée une fois autour de la surface externe 30 de la pièce de formage 26. La feuille 20 présente alors une zone de recouvrement où deux de ses bords entrent en contact.

Si la longueur de la feuille 20 est supérieure à 2^{∗}π^{∗}DP alors la feuille 20 réalise plusieurs tours autour de la pièce de formage 26 et comprend plusieurs couches 38, 39 superposées autour de l'axe D.

La pluralité de couches est formée par une feuille pendant une même étape d'enroulement.

Pour réaliser un nombre donné de tours autour de la pièce de formage 26 avec la feuille 20, la feuille 20 est préalablement coupée aux bonnes dimensions. Alternativement, la feuille est coupée au cours de l'étape d'enroulement.

Lorsque la feuille 20 réalise plusieurs tours autour de la pièce de formage 26, le système de contrôle 34 déplace le rouleau de calandrage 28, 29 pour augmenter successivement la distance entre le rouleau de calandrage 28, 29 et la pièce de formage 26 d'une distance correspondant à l'épaisseur de la feuille à chaque tour de feuille tout en maintenant une pression constante sur la feuille 20. La distance entre la pièce de formage 26 et le rouleau de calandrage 28, 29 permet d'assurer un bon enroulement de la feuille 20 autour de la pièce de formage 26.

En variante, la surface externe 30 de la pièce de formage 26 est chauffée pour que la feuille 20 reste malléable et que, s'il y a plusieurs couches, les couches 38, 39 de la feuille se solidarisent par mélange de leur matrice et grâce à la pression exercée par le ou les rouleaux de calandrage 28, 29 sur la feuille 20 enroulée. Alternativement la surface externe 30 de la pièce de formage 26 est refroidie pour que la feuille 20 prenne la forme de la surface externe 30 et se fige dans cette forme. En variante, la surface externe 30 de la pièce de formage 26 est chauffée dans un premier temps puis refroidie.

Dans un mode de réalisation, la surface externe du rouleau de calandrage 28, 29 est refroidie pour refroidir la feuille 20 pour que la feuille 20 prenne la forme de la surface externe 30 de la pièce de formage 26.

Après l'étape d'enroulement de la feuille 20, dans un mode de réalisation, la feuille 20 enroulée est laissée sur la pièce de formage 26 pendant un temps de repos de sorte à se rigidifier dans la forme souhaitée.

Puis, un système d'extraction décolle et extrait la feuille enroulée 20 de la pièce de formage 26.

Le système d'extraction est par exemple un cylindre monté sur un vérin s'emmanchant sur la pièce de formage 26 et permettant de pousser dans la direction de l'axe D' la feuille enroulée 20 hors de la pièce de formage 26.

La surface 30 de la pièce de formage 26 peut être revêtue d'un traitement facilitant l'extraction comme un revêtement en polytétrafluoroéthylène ou un chromage dur, c'est-à-dire un chromage d'épaisseur comprise entre 10 et 50 micromètres.

En variante, une pluralité de feuilles est enroulée autour de la pièce de formage 26 pendant l'étape d'enroulement, de sorte à réaliser plusieurs couches. L'enroulement des différentes feuilles est réalisé successivement sans étapes intermédiaires.

Sur la figure 6, une coupe transversale d'un exemple de feuille enroulée 20 obtenue par le procédé de l'invention est représentée. La feuille 20 a été enroulée sur deux tours autour de l'axe D.

Enfin, la feuille enroulée 20 est découpée selon un plan P perpendiculaire à l'axe D en plusieurs tronçons formant des profilés 40. Pour obtenir des profilés 40 de même longueur, la feuille enroulée 20 est découpée selon des plans P, P', P" situés à intervalles réguliers le long de l'axe D.

Le procédé décrit ci-dessus permet d'obtenir de façon simple et rapide des profilés en matériau composite dont les fibres peuvent s'étendre dans des directions différentes de la direction de l'axe du profilé

Une variante de ce procédé appliquée à des composites à résine thermodurcissable prévoit de supprimer le four et de réaliser une cuisson de la feuille 20 directement sur la pièce de formage 26 et à l'aide des rouleaux de calandrage 28, 29, la surface externe de la pièce de formage 26 et/ou du rouleau de calandrage 28, 29 étant chauffée.

## Revendications

1. Procédé de fabrication de profilés creux (40), présentant une surface interne, à partir d'une feuille (20) en matériau composite comprenant des fibres (13), la feuille (20) comportant des fibres (13) continues ou coupées et une matrice (14), par exemple thermoplastique ou thermodurcissable, enrobant les fibres (13), le procédé de fabrication comprenant les étapes suivantes :
- fourniture d'une feuille (20) en matériau composite comprenant des fibres (13),
- enroulement de la feuille (20) en matériau composite autour d'une pièce de formage (26), ladite pièce de formage (26) ayant une surface externe (30) sensiblement complémentaire de la surface interne du profilé creux (40) à réaliser, la distance entre le rouleau de calandrage (28, 29) et la pièce de formage (26) variant au cours de l'étape d'enroulement,
- extraction de la feuille composite (20) enroulée de la pièce de formage (26), et
- découpage de la feuille (20) en matériau composite enroulée pour former plusieurs profilés creux (40),
l'étape d'enroulement de la feuille (20) en matériau composite étant associée à un calandrage de la feuille en matériau composite entre au moins un rouleau de calandrage (28, 29) et la pièce de formage (26).

2. Procédé de fabrication selon la revendication 1, **caractérisé en ce que** les profilés creux (40) sont des absorbeurs de chocs.

3. Procédé de fabrication selon l'une quelconque des revendications précédentes, **caractérisé en ce que** les fibres (13) sont des fibres continues ou des fibres coupées.

4. Procédé de fabrication selon l'une quelconque des revendications précédentes, **caractérisé en ce qu'**il comprend, avant l'étape d'enroulement de la feuille (20) en matériau composite, une étape de chauffage de la feuille (20) en matériau composite afin de la rendre malléable.

5. Procédé de fabrication selon l'une quelconque des revendications précédentes, **caractérisé en ce que** la pièce de formage (26) s'étend selon un axe principal (D') et, lors de l'enroulement de la feuille (20), les fibres (13) de la feuille (20) en matériau composite sont orientées selon une direction différente de l'axe principal (D') de la pièce de formage (26).

6. Procédé de fabrication selon l'une quelconque des revendications précédentes, **caractérisé en ce que** la feuille (20) en matériau composite est enroulée sur plusieurs tours autour de la pièce de formage (26).

7. Procédé de fabrication selon l'une quelconque des revendications précédentes, **caractérisé en ce que** la pièce de formage (26) est un rouleau cylindrique.

8. Procédé de fabrication selon l'une quelconque des revendications précédentes, **caractérisé en ce que** la surface externe (30) de la pièce de formage (26) est chauffée pendant l'étape d'enroulement.

9. Procédé de fabrication selon l'une quelconque des revendications 1 à 8, **caractérisé en ce que** la feuille (20) comprend une matrice (14) enrobant les fils (13), la matrice (14) étant thermoplastique.

10. Procédé de fabrication selon l'une quelconque des revendications 1 à 9, **caractérisé en ce qu'**une pluralité de feuilles (20) est enroulée autour de la pièce de formage (26) pendant l'enroulement de sorte à réaliser plusieurs couches, l'enroulement des différentes feuilles (20) étant réalisé successivement sans étapes intermédiaires.

## Patentansprüche

1. Verfahren zur Herstellung von Hohlprofilen (40), welche eine Innenfläche aufweisen, aus einer Lage (20) aus Verbundmaterial, welches Fasern (13) aufweist, wobei die Lage (20) Endlosfasern oder Schnittfasern (13) und eine, beispielsweise thermoplastische oder wärmehärtende, Matrix (14), welche die Fasern (13) umhüllt, wobei das Herstellungsverfahren die folgenden Schritte aufweist:
- Bereitstellen einer Lage (20) aus Verbundmaterial, welches Fasern (13) aufweist,
- Wickeln der Lage (20) aus Verbundmaterial um ein Formgebungsstück (26), wobei das Formgebungsstück (26) eine Außenfläche (30), welche im Wesentlichen komplementär zur Innenfläche des herzustellenden Hohlprofils (40) ist, aufweist, wobei der Abstand zwischen der Kalanderwalze (28, 29) und dem Formgebungsstück (26) im Verlauf des Wickel-Schritts variiert,
- Entfernen der gewickelten Verbundlage (20) von dem Formgebungsstück (26), und
- Zuschneiden der gewickelten Lage (20) aus Verbundmaterial zum Ausbilden mehrerer Hohlprofile (40),
wobei der Schritt des Wickelns der Lage (20) aus Verbundmaterial mit einem Kalandern der Lage aus Verbundmaterial zwischen mindestens einer Kalanderwalze (28, 29) und dem Formgebungsstück (26) verbunden ist.

2. Herstellungsverfahren nach dem Anspruch 1, **gekennzeichnet dadurch, dass** die Hohlprofile (40) Stoßabsorber sind.

3. Herstellungsverfahren nach irgendeinem der vorhergehenden Ansprüche, **gekennzeichnet dadurch, dass** die Fasern (13) Endlosfasern oder Schnittfasern sind.

4. Herstellungsverfahren nach irgendeinem der vorhergehenden Ansprüche, **gekennzeichnet dadurch, dass** es, vor dem Schritt des Wickelns der Lage (20) aus Verbundmaterial, einen Schritt des Erwärmens der Lage (20) aus Verbundmaterial, um diese formbar zu machen, aufweist.

5. Herstellungsverfahren nach irgendeinem der vorhergehenden Ansprüche, **gekennzeichnet dadurch, dass** das Formgebungsstück (26) sich entlang einer Hauptachse (D') erstreckt und, bei dem Aufwickeln der Lage (20), die Fasern (13) der Lage (20) aus Verbundmaterial entlang einer Richtung, welche von der Hauptachse (D') des Formgebungsstücks (26) verschieden ist, ausgerichtet werden.

6. Herstellungsverfahren nach irgendeinem der vorhergehenden Ansprüche, **gekennzeichnet dadurch, dass** die Lage (20) aus Verbundmaterial über mehrere Umdrehungen um das Formgebungsstück (26) gewickelt wird.

7. Herstellungsverfahren nach irgendeinem der vorhergehenden Ansprüche, **gekennzeichnet dadurch, dass** das Formgebungsstück (26) eine zylindrische Walze ist.

8. Herstellungsverfahren nach irgendeinem der vorhergehenden Ansprüche, **gekennzeichnet dadurch, dass** die Außenfläche (30) des Formgebungsstücks (26) während des Wickel-Schritts erwärmt wird.

9. Herstellungsverfahren nach irgendeinem der Ansprüche 1 bis 8, **gekennzeichnet dadurch, dass** die Lage (20) eine Matrix (14) aufweist, welche die Fasern (13) umhüllt, wobei die Matrix (14) thermoplastisch ist.

10. Herstellungsverfahren nach irgendeinem der Ansprüche 1 bis 9, **gekennzeichnet dadurch, dass** eine Mehrzahl an Lagen (20) um das Formgebungsstück (26) während des Wickelns gewickelt wird, um mehrere Schichten zu realisieren, wobei das Wickeln von unterschiedlichen Lagen (20) nacheinander ohne Zwischenschritte realisiert wird.

## Claims

1. Method for producing hollow sections (40), having an inner surface, from a sheet (20) of composite material comprising fibres (13), the sheet (20) comprising continuous or chopped fibres (13) and a matrix (14), for example a thermoplastic or thermosetting matrix, coating the fibres (13), the production method comprising the following steps:
- providing a sheet (20) of composite material comprising fibres (13),
- winding the sheet (20) of composite material around a forming element (26), said forming element (26) having an outer surface (30) substantially complementary to the inner surface of the hollow section (40) to be produced, the distance between the calendering roller (28, 29) and the forming element (26) varying during the winding step,
- removing the wound composite sheet (20) from the forming element (26), and
- cutting the wound sheet (20) of composite material to form a plurality of hollow sections (40),
the step of winding the sheet (20) of composite material being associated with calendering of the sheet of composite material between at least one calendering roller (28, 29) and the forming element (26).

2. Production method according to claim 1, **characterised in that** the hollow sections (40) are shock absorbers.

3. Production method according to any one of the preceding claims, **characterised in that** the fibres (13) are continuous fibres or chopped fibres.

4. Production method according to any one of the preceding claims, **characterised in that** it comprises, before the step of winding the sheet (20) of composite material, a step of heating the sheet (20) of composite material in order to make it malleable.

5. Production method according to any one of the preceding claims, **characterised in that** the forming element (26) extends along a principal axis (D') and, during winding of the sheet (20), the fibres (13) of the sheet (20) of composite material are oriented in a direction different from the principal axis (D') of the forming element (26).

6. Production method according to any one of the preceding claims, **characterised in that** the sheet (20) of composite material is wound over a plurality of turns around the forming element (26).

7. Production method according to any one of the preceding claims, **characterised in that** the forming element (26) is a cylindrical roller.

8. Production method according to any one of the preceding claims, **characterised in that** the outer surface (30) of the forming element (26) is heated during the winding step.

9. Production method according to any one of claims 1 to 8, **characterised in that** the sheet (20) comprises a matrix (14) coating the threads (13), the matrix (14) being thermoplastic.

10. Production method according to any one of claims 1 to 9, **characterised in that** a plurality of sheets (20) is wound around the forming element (26) during the winding so as to produce a plurality of layers, the winding of the different sheets (20) being carried out in succession without intermediate steps.
